# EUROPEAN PATENT APPLICATION

(11) **EP 4 851 832 A1**
(43) Date of publication of application: **09.12.2026**
(21) Application number: 25769315.0
(22) Date of filing: 06.03.2025
(51) Int. Cl.: G06F 18/214, G06F 40/284

(54) **CASE GENERATION METHOD AND RELATED APPARATUS**

(30) Priority: 13.03.2024 CN 202410292519
(71) Applicant: HUAWEI TECHNOLOGIES CO., LTD., Shenzhen, Guangdong 518129 (CN)
(72) Inventor: LUO, Ji, Shenzhen, Guangdong 518129 (CN); XU, Wenkai, Shenzhen, Guangdong 518129 (CN); WANG, Weihao, Shenzhen, Guangdong 518129 (CN); YANG, Tingting, Shenzhen, Guangdong 518129 (CN)
(74) Representative: Isarpatent
(86) International application number: PCT/CN2025/080973
(87) International publication number: WO 2025/190144

(57) **Abstract**

A case generation method is provided for generating cases in professional fields such as law, medicine, or economics. According to the method, an existing case is used as a reference case, and a similar new case is generated by using a large language model. After the new case is generated, accuracy of the new case is further evaluated from different dimensions by using the large language model. If the accuracy of the new case meets a requirement, the generated new case is output. By leveraging a knowledge base and a semantic comprehension capability of the large language model, the large language model is indicated to generate new cases with reference to existing cases and further evaluate the generated new cases from different dimensions, thereby overcoming hallucination issues inherent in the large language model and ensuring accuracy of the generated new cases. In addition, in this solution, cases are automatically generated by using a large language model, without manual construction, thereby effectively improving case construction efficiency.

## Description

This application claims priority to Chinese Patent Application No. 202410292519.5, filed with the China National Intellectual Property Administration on March 13, 2024 and entitled "CASE GENERATION METHOD AND RELATED APPARATUS", which is incorporated herein by reference in its entirety.

### TECHNICAL FIELD

This application relates to the field of artificial intelligence (Artificial Intelligence, AI) technologies, and in particular, to a case generation method and a related apparatus.

### BACKGROUND

In applied disciplines, a case generally refers to a typical instance with universality, representativeness, and practical significance in a specific field, especially in law, economics, medicine, and the like. Cases reflect how problems and work occur and develop. By analyzing such cases, solutions and approaches to the problems can be proposed. Based on existing cases, researchers can conduct in-depth research and analysis on related problems to identify findings and extract regular and universal rules. This is one of the most efficient and accurate research methods and approaches in applied disciplines.

Currently, cases in most fields are primarily constructed manually by professionals in the relevant fields. For example, in the field of law, cases usually include legal cases that have occurred and interpretation of the legal cases. Accordingly, legal practitioners with proficient expertise need to meticulously label legal cases from the perspective of laws and regulations, so as to construct high-quality cases.

However, manual case construction by professionals consumes substantial human resources and is extremely inefficient.

### SUMMARY

This application provides a case generation method, which eliminates the need for manual case construction and effectively improves case construction efficiency.

A first aspect of this application provides a case generation method, used to generate a case in a professional field, for example, law, medicine, or economics. The method includes: First, obtaining a first prompt, where the first prompt includes a first case, and the first prompt indicates to generate another case with reference to the first case. The first case includes a historical event and a reasoning process for the historical event, and the first case is, for example, a case manually constructed by a professional. The first prompt may be, for example: Generate a similar case based on the following case; and case content includes "The course of the case is XXX, and the case reasoning process is XXX."

Second, inputting the first prompt into a first model, to obtain a second case output by the first model. The second case is generated by the first model with reference to the first case, and the first model is a large language model. After the first prompt is input into the first model, the first model can recognize a semantic meaning expressed by the first prompt, so as to understand a task that a user expects the first model to complete, and output the second case.

Third, evaluating accuracy of the second case from different dimensions by using a second model, to obtain scores of the second case in the different dimensions. To be specific, after the second case generated by using the large language model is obtained, the large language model is further used as a judge to evaluate the accuracy of the generated second case from the different dimensions, so as to ensure that evaluation of the second case in each dimension is accurate, and finally ensure quality of the obtained new case. The second model may be a large language model.

When the scores of the second case in the different dimensions meet a target condition, it indicates that the accuracy of the second case meets a requirement. Therefore, the second case is output.

In this solution, an existing case is used as a reference case, and a similar new case is generated by using a large language model. After the new case is generated, accuracy of the new case is further evaluated from different dimensions by using the large language model. If the accuracy of the new case meets a requirement, the generated new case is output. In this solution, by leveraging a powerful knowledge base and semantic comprehension capability of a large language model, the large language model is indicated to generate new cases with reference to existing cases and further evaluate the generated new cases from different dimensions, thereby ensuring accuracy of the generated new cases, overcoming a hallucination issue inherent in the large language model (that is, an issue of inaccuracy of the generated new cases arising from excessive content associated during case generation), and finally ensuring that the content and a format of the new case can be consistent with those of the existing case. In addition, in this solution, cases are automatically generated by using a large language model, without manual construction, thereby effectively improving case construction efficiency.

In a possible implementation, when the scores of the second case in the different dimensions do not meet the target condition, a modification goal is set for the first model, and the second case is modified based on the modification goal by using the first model, to enable the first model to output a modified case whose scores in the different dimensions meet the target condition.

In other words, if the second case does not meet the target condition, it indicates that the second case generated by the first model is incorrect, and the second case needs to be further modified. Therefore, by setting the modification goal for the first model, the first model can be indicated to continuously modify the second case until scores of a case modified by the first model in the different dimensions can meet the target condition.

In this solution, when a case output by a large language model does not meet a requirement, a modification goal is set for the large language model, so that the large language model continuously modifies a previously output case, until accuracy of a finally output case can meet the requirement. This ensures accuracy of a case output by the large language model, effectively leverages a case initially output by the large language model, and improves efficiency of generating a valid case by the large language model.

In a possible implementation, when the accuracy of the second case is evaluated from the different dimensions by using the second model, a modification suggestion of the second case may be further obtained. The modification suggestion is obtained when the accuracy of the second case is evaluated from the different dimensions by using the second model. To be specific, when the accuracy of the second case is evaluated from the different dimensions by using the second model, the second model is further required to provide a corresponding modification suggestion on the second case.

In this solution, when accuracy of a case is evaluated by using a large language model, the large language model is further required to output a modification suggestion on the case, so that the case can be modified subsequently based on the modification suggestion provided by the large language model, thereby improving modification efficiency of the case, and ensuring that accuracy of a modified case can be effectively improved to meet a user requirement.

In a possible implementation, the setting the modification goal for the first model, and modifying, by using the first model, the second case based on the modification goal may be implemented by cyclically performing a plurality of steps.

First, based on a modification suggestion corresponding to a case previously output by the first model, the previously output case is modified by using the first model to obtain a new case. The second case is a case output by the first model for the first time. Therefore, the second case is also the 1st version of the case that needs to be modified by the first model.

Then, accuracy of the new case is evaluated from different dimensions by using the second model, to obtain scores of the new case in different dimensions.

In this way, the foregoing steps are cyclically performed until scores of a case output by the first model in the different dimensions meet the target condition, to obtain a case output by the first model for the last time.

In this solution, by cyclically performing a process in which the second model serving as a judge outputs a modification suggestion, and the first model serving as a case generator continuously modifies a generated case based on the modification suggestion, the first model can continuously optimize an initially generated case in a targeted manner, so that a case can be automatically optimized in a cycle, and high-quality cases can be generated in batches.

In a possible implementation, the second model includes a plurality of different large language models. To evaluate the accuracy of the second case from the different dimensions, the second case may be separately input into the plurality of different large language models, to obtain scores respectively output by the plurality of different large language models. The plurality of different large language models may be large language models with different structures or different training processes, for example, large language models constructed by different vendors or companies.

In this solution, a plurality of different large language models are used to comprehensively evaluate accuracy of a case, so as to ensure that an output case is recognized by most large language models, thereby avoiding a one-sided result of evaluation by a single large language model, and effectively ensuring accuracy of a finally output case.

In a possible implementation, after the second case output by the first model is obtained, a plurality of prompts may be constructed first based on the second case. The plurality of prompts each include the second case, the plurality of prompts respectively indicate to evaluate the accuracy of the second case from different evaluation perspectives, and the evaluation perspectives are all related to a field to which the second case relates. Then, the plurality of prompts are separately input into the second model, to obtain scores of the second case in the different evaluation perspectives.

In this solution, for a field to which a case relates, a generated same case is evaluated from different evaluation perspectives related to the field, so that accuracy of separately evaluating the case from different concerns can be implemented, and accuracy of evaluating the case by using a large language model can be improved, thereby ensuring high accuracy of a finally output case from all perspectives.

In a possible implementation, the target condition includes that a weighted average value of scores of a case in different dimensions is greater than or equal to a target threshold.

In a possible implementation, after the second case is output, a second prompt may be further obtained, where the second prompt is obtained by modifying the first prompt by a user based on the second case. Then, the second prompt is input into the first model, to obtain a third case output by the first model; and accuracy of the third case is evaluated by using the second model from different dimensions, to obtain scores of the third case in the different dimensions. When the scores of the third case in the different dimensions meet the target condition, the third case is output.

In this solution, after a case whose accuracy is ensured is output by using a large language model, manual verification is further performed to ensure accuracy of a final case, and a prompt that is manually adjusted based on a problem found during case verification is obtained, so that a case with higher quality is generated based on the adjusted prompt, thereby further improving quality of a subsequently generated case.

In a possible implementation, the second prompt is obtained by adding guidance information to the first prompt based on the second case, and the guidance information indicates how to generate a new case with reference to the first case. To be specific, after finding, by verifying the second case, some incorrect content in the second case, a professional may add, to the original prompt, some guidance information that can help the large language model generate a better case, so that the large language model can generate a more accurate case based on the guidance information.

In this solution, a professional in a field to which a case relates adds guidance information to a prompt, so that more knowledge in a professional background can be integrated into the prompt, thereby helping guide a large language model in generating a case with higher quality.

In a possible implementation, the second prompt is obtained by modifying the first case in the first prompt based on the second case. For example, some content with ambiguous explanation or flawed reasoning in the first case is further explained, so that the large language model better understands a reference case in the first prompt. For another example, when quality of the second case is high, the first case in the first prompt is replaced with the second case, so that the newly generated second case is used as a reference case, to further generate another case.

A second aspect of this application provides a case generation apparatus, including: an obtaining module, configured to obtain a first prompt, where the first prompt includes a first case, and the first prompt indicates to generate another case with reference to the first case; and a processing module, configured to input the first prompt into a first model, to obtain a second case output by the first model, where the second case is generated by the first model with reference to the first case; the processing module is further configured to evaluate accuracy of the second case from different dimensions by using a second model, to obtain scores of the second case in the different dimensions; and the processing module is further configured to: when the scores of the second case in the different dimensions meet a target condition, output the second case.

In a possible implementation, both the first model and the second model are large language models.

In a possible implementation, the processing module is further configured to: when the scores of the second case in the different dimensions do not meet the target condition, set a modification goal for the first model, and modify, by using the first model, the second case based on the modification goal, to enable the first model to output a modified case whose scores in the different dimensions meet the target condition.

In a possible implementation, the obtaining module is further configured to obtain a modification suggestion of the second case, where the modification suggestion is obtained when the accuracy of the second case is evaluated from the different dimensions by using the second model; and the modification goal includes modifying the second case with reference to the modification suggestion, to enable the scores of the modified case in the different dimensions to meet the target condition.

In a possible implementation, the processing module is further configured to: based on a modification suggestion corresponding to a case previously output by the first model, modify, by using the first model, the previously output case to obtain a new case, where the second case is a case output by the first model for the first time; evaluate accuracy of the new case from the different dimensions by using the second model, to obtain scores of the new case in the different dimensions; and cyclically perform the foregoing steps until scores of a case output by the first model in the different dimensions meet the target condition, to obtain a case output by the first model for the last time.

In a possible implementation, the second model includes a plurality of different large language models, and the processing module is further configured to: separately input the second case into the plurality of different large language models, to obtain scores respectively output by the plurality of different large language models.

In a possible implementation, the processing module is further configured to: construct a plurality of prompts based on the second case, where the plurality of prompts each include the second case, the plurality of prompts respectively indicate to evaluate the accuracy of the second case from different evaluation perspectives, and the evaluation perspectives are all related to a field to which the second case relates; and separately input the plurality of prompts into the second model, to obtain scores of the second case in the different evaluation perspectives.

In a possible implementation, the target condition includes that a weighted average value of scores of a case in different dimensions is greater than or equal to a target threshold.

In a possible implementation, after the second case is output, the obtaining module is further configured to obtain a second prompt, where the second prompt is obtained by modifying the first prompt by a user based on the second case; and
the processing module is further configured to: input the second prompt into the first model, to obtain a third case output by the first model; evaluate accuracy of the third case from different dimensions by using the second model, to obtain scores of the third case in the different dimensions; and when the scores of the third case in the different dimensions meet the target condition, output the third case.

In a possible implementation, the second prompt is obtained by adding guidance information to the first prompt based on the second case, and the guidance information indicates how to generate a new case with reference to the first case.

In a possible implementation, the second prompt is obtained by modifying the first case in the first prompt based on the second case.

A third aspect of this application provides a compute device cluster, including at least one compute device, where each compute device includes a processor and a memory. The processor of the at least one compute device is configured to execute instructions stored in the memory of the at least one compute device, to enable the compute device cluster to perform the method according to any one of the first aspect or the possible implementations of the first aspect. For details of the steps performed by the computer device cluster in the possible implementations of the first aspect, refer to the first aspect. Details are not described herein again.

A fourth aspect of this application provides a computer-readable storage medium. The computer-readable storage medium stores instructions. When the instructions are run on a computer, the computer is enabled to perform the method according to any one of the foregoing aspects.

A fifth aspect of this application provides a computer program product including instructions. When the instructions are run on a computer, the computer is enabled to perform the method according to any one of the foregoing aspects.

A sixth aspect of this application provides a chip. The chip includes a processor and a communication interface. The communication interface is configured to communicate with a module other than the chip. The processor is configured to run a computer program or instructions, so that an apparatus in which the chip is installed can perform the method according to any one of the foregoing aspects.

For technical effects brought by any design of the second aspect to the sixth aspect, refer to the technical effects brought by different implementations of the first aspect. Details are not described herein again.

### BRIEF DESCRIPTION OF DRAWINGS

FIG. 1 is a diagram of a system architecture 100 according to an embodiment of this application;
FIG. 2 is a schematic flowchart of a case generation method according to an embodiment of this application;
FIG. 3 is a diagram of generating a case by using a large language model according to an embodiment of this application;
FIG. 4 is a diagram of evaluating a case by using a plurality of large language models according to an embodiment of this application;
FIG. 5 is a diagram of implementing case evaluation based on a plurality of prompts constructed from different evaluation perspectives according to an embodiment of this application;
FIG. 6 is a diagram of modifying a case by setting a modification goal according to an embodiment of this application;
FIG. 7 is a diagram of modifying a case by setting a modification goal and with reference to a modification suggestion according to an embodiment of this application;
FIG. 8 is a diagram of a process of generating a case by using a large language model according to an embodiment of this application;
FIG. 9 is a diagram of a structure of a case generation apparatus according to an embodiment of this application;
FIG. 10 is a diagram of a structure of a chip according to an embodiment of this application;
FIG. 11 is a diagram of a structure of a compute device 1100 according to an embodiment of this application;
FIG. 12 is a diagram of a structure of a compute device cluster according to an embodiment of this application;
FIG. 13 is a diagram of a structure of another compute device cluster according to an embodiment of this application; and
FIG. 14 is a diagram of a structure of a computer-readable storage medium according to an embodiment of this application.

### DESCRIPTION OF EMBODIMENTS

To make the objectives, technical solutions, and advantages of this application clearer and more comprehensible, the following describes embodiments of this application with reference to the accompanying drawings. It is clear that the described embodiments are merely a part but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in appropriate cases, so that embodiments can be implemented in an order other than the order illustrated or described in this application. In addition, the terms "include", "have", and any variants thereof are intended to cover a non-exclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved. Unit division in this application is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in electronic or other similar forms. This is not limited in this application. In addition, units or subunits described as separate parts may or may not be physically separate, may or may not be physical units, or may be distributed into a plurality of circuit units. Some or all of the units may be selected according to actual requirements to achieve the objectives of the solutions of this application.

For ease of understanding, the following first describes some technical terms in embodiments of this application.

### (1) Case

A case generally refers to a typical instance having universal, representative, and practical significance in a specific field, especially in law, economics, medicine, and the like. Cases reflect how problems and work occur and develop. Through analysis of such cases, solutions and approaches to the problems can be proposed.

For example, in the field of medicine, a case is a well-documented record of a disease diagnosis and treatment method. In the educational field, case teaching is built upon authentic, typical, and representative instances to help students master problem-resolving methodologies and thinking, and improve their capabilities of understanding and tackling practical problems. In the commercial field, a case demonstrates significance of a management practice and commercial value of a success story, thereby helping an enterprise formulate competitive strategies. A case may further be a fact-based or fictional incident narrated in a literary form, generally involving an individual or a specific group to describe a circumstance and scenario.

Based on a case, researchers can conduct in-depth research and analysis on related problems to identify findings and extract regular and universal rules. This is one of the most efficient and accurate research methods and approaches for applied disciplines. Case analysis has long been a highly effective research instrument across disciplines including psychology, management science, pedagogy, medicine, and law.

### (2) Large language model (large language model, LLM)

A large language model is a deep learning model trained using a large amount of text data, and can generate a natural language text or understand a meaning of a language text. The large language model can process a plurality of natural language tasks, such as text classification, question and answer, and dialogs, and is an important way to artificial intelligence.

Specifically, the large language model is a technology emerging in recent years. Because the large language model undergoes a refined data engineering and training process, a large amount of existing natural language processing knowledge has been embedded within internal parameters of the large language model. This knowledge may enable the large language model to do many language-related tasks, for example, code writing or text summarization.

### (3) Prompt (Prompt)

Prompt originates as an input form designed by researchers for downstream tasks. It enables a pre-trained model to recall knowledge acquired during pre-training. Therefore, prompt may also be referred to as prompt. For a large language model, a prompt is a user input and indicates a task to be completed by the large language model. A prompt may be a simple question, a long paragraph of text, or a set of instructions, depending on a specific user requirement. Generally, a prompt is a short text string that provides context and task-related information, so as to help the model better understand a requirement and generate a correct output. For example, in a question and answer task, a prompt may include a description of a question or topic to help the large language model generate a correct answer. In addition, prompts are typically designed by humans to help a large language model better understand a specific task or field.

When generating content, a large language model first processes a prompt and then produces an output based on its understanding of the prompt. A working principle of a large language model is as follows: The model predicts a probability of occurrence of a next token based on a preceding user input, and generates subsequent content token by token. Therefore, different prompts input by a user directly affect quality of an output result of the large language model. Under some circumstances, even a minor difference in the wording of a prompt input by the user may lead to substantially divergent content generated by the large language model.

Currently, cases for most professional fields are manually constructed by professionals in the corresponding fields. Although cases constructed by professionals have high quality, this case construction approach generally consumes substantial human resources and suffers from low efficiency, making it difficult to generate cases in large batches.

Based on this, this application provides a case generation method. An existing case is used as a reference case, and a similar new case is generated by using a large language model. After the new case is generated, accuracy of the new case is further evaluated from different dimensions by using the large language model. If the accuracy of the new case meets a requirement, the generated new case is output.

In this solution, by leveraging a powerful knowledge base and semantic comprehension capability of a large language model, the large language model is indicated to generate a new case with reference to an existing case and further evaluate the generated new case from different dimensions, thereby ensuring accuracy of the generated new case, overcoming a hallucination issue inherent in the large language model (that is, an issue of inaccuracy of the generated new case arising from excessive content associated during case generation), and finally ensuring that the content and a format of the new case can be consistent with those of the existing case. In addition, in this solution, a case is automatically generated by using a large language model, without manual construction, thereby effectively improving case construction efficiency.

Specifically, because the large language model acquires excessive knowledge, when generating a new case based on a reference case, the large language model generally associates, based on the reference case, a large amount of acquired knowledge content (that is, a hallucination issue inherent in the large language model), which may eventually result in incorrect content in the generated case. Therefore, in this solution, in addition to using a large language model as a content producer, the large language model is further used as a judge to evaluate accuracy of a generated new case from different dimensions, so as to ensure that evaluation of the new case in each dimension is accurate, and finally ensure quality of the obtained new case.

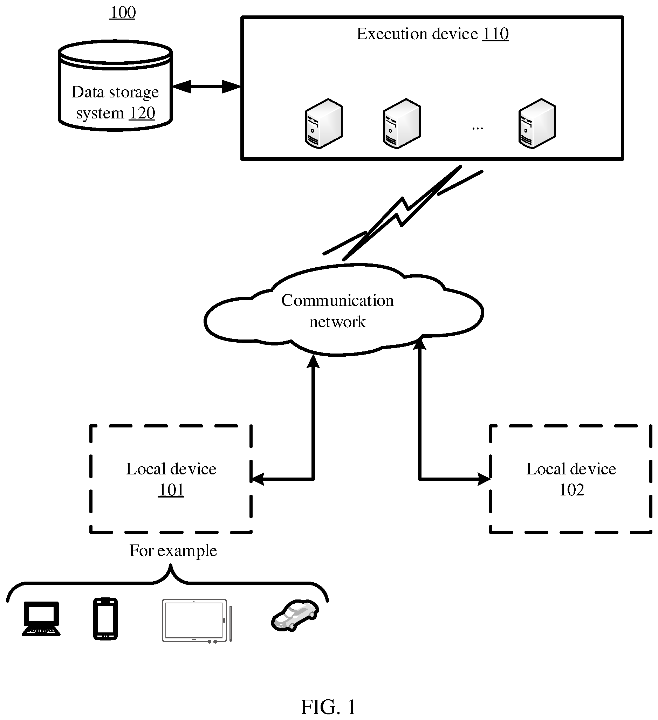

FIG. 1 is a diagram of a system architecture 100 according to an embodiment of this application. As shown in FIG. 1, in the system architecture 100, an execution device 110 may be implemented by at least one compute instance of a physical host (a compute device), a virtual machine, or a container. When the execution device 110 is implemented by a virtual machine or a container, the execution device 110 actually exists in a form of a cloud computing product, and can provide a cloud service.

Optionally, the execution device 110 cooperates with another compute device, for example, a data storage device or a load balancer. The execution device 110 may be disposed at one physical site, or may be distributed at a plurality of physical sites.

Optionally, to perform persistent storage on data, a data storage system 120 is further disposed in the system architecture 100. The data storage system 120 may be located outside the execution device 110 (as shown in FIG. 1), and exchanges data with the execution device 110 through a network. Optionally, when the execution device 110 is a physical host, the data storage system 120 may alternatively be located inside the execution device 110. For example, the data storage system 120 exchanges data with a processor through a bus. In this case, the data storage system 120 is represented as a hard disk. When the data storage system 120 is present, the execution device 110 may use data in the data storage system 120 or invoke program code in the data storage system 120 to implement the case generation method provided in embodiments of this application.

Optionally, users may operate their respective user equipment (for example, a local device 101 and a local device 102) to interact with the execution device 110. Each local device may represent any compute device, for example, a personal computer, a computer workstation, a smartphone, a tablet computer, a notebook computer, or an intelligent vehicle.

The local device of each user may interact with the execution device 110 through a communication network of any communication mechanism/communication standard. The communication network may be a wide area network, a local area network, a point-to-point connection, or any combination thereof.

In an implementation, the execution device 110 is configured to implement the case generation method provided in embodiments of this application, to construct a new case. Optionally, in a process in which the execution device 110 implements the case generation method, the local device 101 and the local device 102 may provide corresponding cases or prompts for the execution device 110, so that the execution device 110 can generate a case. In addition, in a process in which the local device 101 and the local device 102 need to generate a new case, the execution device 110 may process, based on the case generation method, task data input by a user (for example, a case provided by the user or a prompt), to obtain the new case, and then return the generated new case to the local device 101 and the local device 102. In another implementation, one or more aspects of the execution device 110 may be implemented by each local device. For example, the local device 101 may provide local data for or feed back a computation result to the execution device 110, or perform the case generation method provided in embodiments of this application.

In general, the case generation method provided in embodiments of this application may be applied to an electronic device, for example, the execution device 110, the local device 101, or the local device 102.

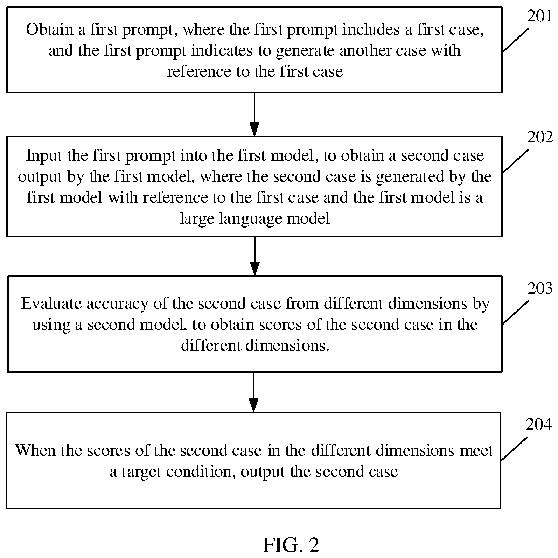

FIG. 2 is a schematic flowchart of a case generation method according to an embodiment of this application. As shown in FIG. 2, the case generation method provided in this embodiment of this application includes the following steps 201 to 204.

Step 201: Obtain a first prompt, where the first prompt includes a first case, and the first prompt indicates to generate another case with reference to the first case.

In this embodiment, before a new case is generated, an existing case may be first obtained as a reference case. For example, a case manually constructed by a professional is obtained as the reference case to ensure accuracy of the obtained reference case. In this way, a prompt may be constructed based on the obtained case.

Specifically, in this embodiment, the obtained first prompt is constructed based on the obtained first case. In addition, the first prompt is used to be input into a model, to indicate the model to generate another case with reference to the first case in the first prompt. The first case included in the first prompt is a case that has been obtained and whose accuracy is ensured, and is used as the reference case.

The first case includes a historical event and a reasoning process for the historical event. Both the historical event and the reasoning process for the historical event are closely related to a field to which the first case relates.

For example, when the first case is a case in the field of law, the historical event may be, for example, a prior legal case (for example, a criminal case or a civil case), and the reasoning process may be a legal reasoning process for the legal case, for example, determining, based on a situation of the legal case, a law article applicable to the legal case, and determining a judgment result of the legal case based on the law article applicable to the legal case.

For another example, when the first case is a case in the field of medicine, the historical event may be, for example, a medical record of a patient in the historical event, and the reasoning process may be a medical reasoning process for symptoms of the patient, for example, inquiring about, based on some symptoms of the patient, whether the patient has other related symptoms, determining a root cause of the symptoms based on all symptoms of the patient, and determining a medication regimen for the patient based on the root cause of the symptoms of the patient.

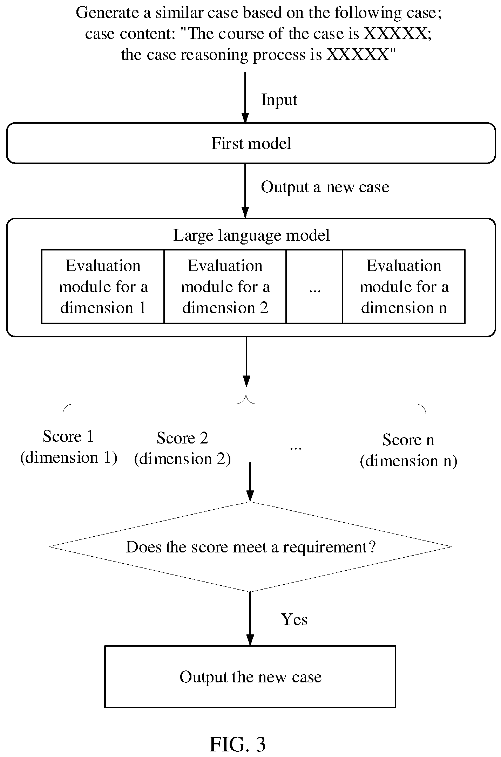

The first prompt may be further generated on the basis of the first case, to indicate the model to generate a case similar to the first case. For example, FIG. 3 is a diagram of generating a case by using a large language model according to an embodiment of this application. As shown in FIG. 3, for the first prompt that needs to be input into a first model, the first prompt may be specifically as follows: Generate a similar case based on the following case; and case content includes "The course of the case is XXX, and the case reasoning process is XXX."

Step 202: Input the first prompt into the first model, to obtain a second case output by the first model, where the second case is generated by the first model with reference to the first case.

In this embodiment, the first model may be a large language model. After the first prompt is input into the first model, the first model can recognize a semantic meaning expressed by the first prompt, so as to understand a task that a user expects the first model to complete, and output the second case. In other words, in a process of processing the first prompt, the first model generates the corresponding second case with reference to the first case.

Step 203: Evaluate accuracy of the second case from different dimensions by using a second model, to obtain scores of the second case in the different dimensions.

The second model is specifically a large language model. It may be understood that, because the large language model acquires excessive knowledge, when generating a new case based on a reference case, the large language model generally associates, based on the reference case, a large amount of acquired knowledge content (that is, a hallucination issue inherent in the large language model), which may eventually result in incorrect content in the generated case. Therefore, in this step, after the second case generated by using the large language model is obtained, the large language model is further used as a judge to evaluate the accuracy of the generated second case from the different dimensions, so as to ensure that evaluation of the second case in each dimension is accurate, and finally ensure quality of the obtained new case.

As shown in FIG. 3, based on the large language model, evaluation modules for a plurality of different dimensions may be constructed, for example, an evaluation module for a dimension 1, an evaluation module for a dimension 2, ..., an evaluation module for a dimension n. In this way, the same second case is evaluated by the evaluation modules for different dimensions, so that the scores of the second case in the different dimensions can be obtained.

Step 204: Output the second case when the scores of the second case in the different dimensions meet a target condition.

In this embodiment, the target condition may be determined based on an actual application scenario (for example, a quantity of dimensions and a case accuracy requirement), and is used to measure accuracy of a case. When the scores of the second case in the different dimensions meet the target condition, it indicates that the accuracy of the second case meets a requirement, and therefore the second case may be output. When the scores of the second case in the different dimensions do not meet the target condition, it indicates that the accuracy of the second case does not meet a requirement, and therefore the second case may not be output.

For example, the target condition may include that a weighted average value of scores of a case in different dimensions is greater than or equal to a target threshold. For example, for the second case, the second case has a score in each of a plurality of different dimensions. Therefore, weighted summation may be performed on the scores in the different dimensions, and an average value is calculated based on an obtained sum value, to finally obtain a weighted average value. In this way, whether the second case meets the target condition may be determined by comparing the weighted average value obtained through calculation with the target threshold.

As shown in FIG. 3, after the evaluation modules for different dimensions score the new case output by the first model, scores in the different dimensions may be obtained, for example, a score 1 in the dimension 1, a score 2 in the dimension 2, ..., a score n in the dimension n. Then, for the scores in the different dimensions, the weighted average value of the scores in the plurality of dimensions may be obtained through calculation based on a formula (score 1+score 2+...+score n)/n, and whether the weighted average value obtained through calculation is greater than or equal to a target threshold is determined, so as to determine whether to output the new case.

In this embodiment, there may be a plurality of manners of evaluating the accuracy of the second case from the different dimensions.

In a possible implementation, the second model may specifically include a plurality of different large language models. After the second case output by the first model is obtained, the second case is separately input into the plurality of different large language models, to obtain scores respectively output by the plurality of different large language models. The plurality of different large language models may be large language models with different structures or different training processes, for example, large language models constructed by different vendors or companies. A source of the large language model is not limited in this embodiment. For example, the plurality of different large language models may be, for example, Pangu large language model, Qwen large language model, and GPT-4 large language model.

In addition, a process of inputting the second case into the plurality of different large language models may be specifically as follows: First, a prompt is generated with reference to the second case, where the prompt includes the second case, and the prompt indicates the large language model to evaluate the accuracy of the second case. For example, the prompt may be specifically as follows: "In a XX scenario, the second case is specifically XXX. Analyze the second case to determine whether the second case is accurate, and score the second case based on a degree of the accuracy of the second case. A scoring rule is specifically XXX." For each of the plurality of different large language models, a same prompt may be input, so that each large language model scores the second case. Finally, scores output by the different large language models may be scores of the second case in the different dimensions.

Different large language models may have different performance due to different structures or training processes. When different large language models are used to evaluate the accuracy of the second case, if the scores output by the plurality of large language models are all high, it indicates that all the large language models recognize the accuracy of the second case. Therefore, it may be considered that the accuracy of the second case meets the requirement. In general, a plurality of different large language models are used to comprehensively evaluate accuracy of a case, so as to ensure that an output case is recognized by most large language models, thereby avoiding a one-sided result of evaluation by a single large language model, and effectively ensuring accuracy of a finally output case.

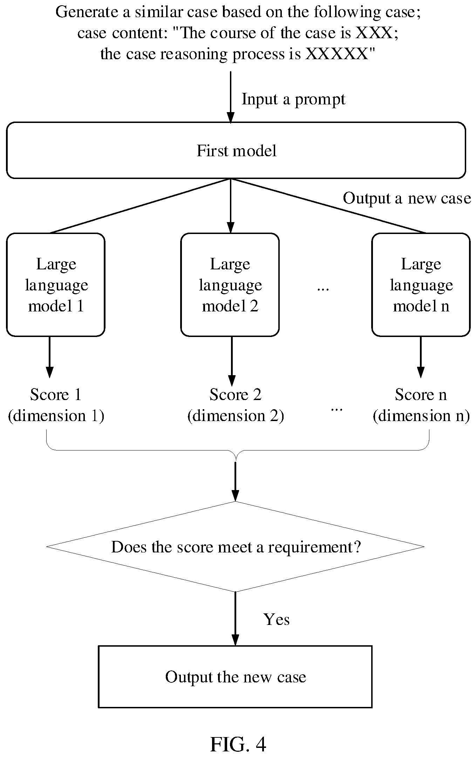

For example, FIG. 4 is a diagram of evaluating a case by using a plurality of large language models according to an embodiment of this application. As shown in FIG. 4, after the first model outputs a new case based on an input prompt, a prompt may be constructed based on the new case, to indicate to evaluate the new case. Then, the prompt constructed based on the new case is separately input into a large language model 1, a large language model 2, ..., and a large language model n, to obtain the score 1 (that is, a score in the dimension 1) output by the large language model 1, the score 2 (that is, a score in the dimension 2) output by the large language model 2, ..., and the score n (that is, a score in the dimension n) output by the large language model n. Finally, based on the scores in the n dimensions output by the n large language models, it may be determined whether the scores of the new case meet the requirement (that is, whether the foregoing target condition is met), so as to determine whether to output the new case.

In another possible implementation, after the second case output by the first model is obtained, a plurality of prompts are constructed first based on the second case. The plurality of prompts each include the second case, the plurality of prompts respectively indicate to evaluate the accuracy of the second case from different evaluation perspectives, and the evaluation perspectives are all related to a field to which the second case relates. In this way, for the plurality of prompts constructed based on the second case, each prompt indicates the large language model to evaluate the accuracy of the second case from one evaluation perspective, and different prompts indicate different evaluation perspectives.

For example, when the second case is a case in the field of law, a plurality of different evaluation perspectives from which the second case is evaluated may include a perspective of company law, a perspective of tax law, a perspective of labor law, a perspective of contract law, a perspective of tax processing, a perspective of applicability of law articles, a perspective of reasoning of a result judgment, and the like. For another example, when the second case is a case in the field of medicine, a plurality of different evaluation perspectives from which the second case is evaluated may include symptom reasoning, a degree of medical knowledge matching, clinical medicine, pharmacology, and the like.

Then, the plurality of prompts are separately input into the second model, to obtain scores of the second case in the different evaluation perspectives. The second model used in this step may be a same model as the first model, or may be another large language model different from the first model. In other words, the plurality of prompts are separately input into a same large language model, to obtain the scores of the second case in the different evaluation perspectives.

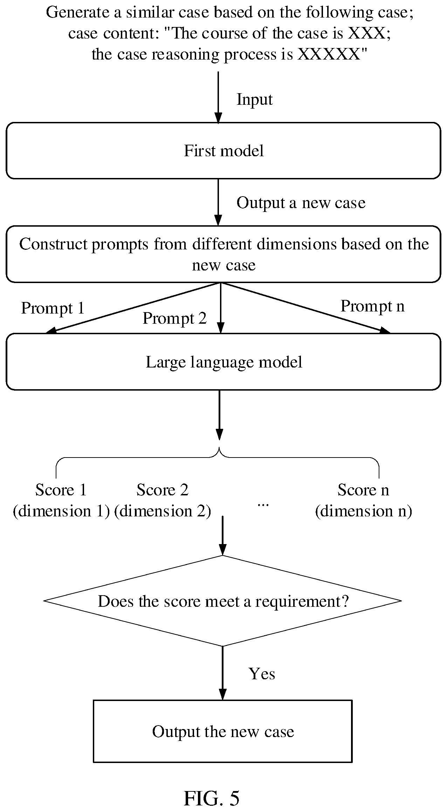

For example, FIG. 5 is a diagram of implementing case evaluation based on a plurality of prompts constructed from different evaluation perspectives according to an embodiment of this application. As shown in FIG. 5, after the first model outputs a new case based on an input prompt, a plurality of prompts (that is, a prompt 1, a prompt 2, ..., a prompt n in FIG. 5) may be constructed for the new case from different evaluation perspectives. The plurality of prompts respectively indicate to evaluate the new case from the different evaluation perspectives. Then, the prompt 1, the prompt 2, ..., and the prompt n that are constructed based on the new case are separately input into the large language model, to obtain the score 1 (that is, a score in the dimension 1), the score 2 (that is, a score in the dimension 2), ..., and the score n (that is, a score in the dimension n) that are output by the large language model based on the different prompts. Finally, based on the scores in the n dimensions output by the large language model, it may be determined whether the scores of the new case meet the requirement (that is, whether the foregoing target condition is met), so as to determine whether to output the new case.

In this solution, for a field to which a case relates, a generated same case is evaluated from different evaluation perspectives related to the field, so that accuracy of separately evaluating the case from different concerns can be implemented, and accuracy of evaluating the case by using a large language model can be improved, thereby ensuring high accuracy of a finally output case from all perspectives.

It should be noted that, under some circumstances, the foregoing two implementations may alternatively be combined. To be specific, after the plurality of prompts are constructed from the different evaluation perspectives, the plurality of prompts are separately input into each of the plurality of different large language models, to obtain scores, in the different evaluation perspectives, of the second case output by each large language model, and finally, whether the accuracy of the second case meets the target condition is determined by combining the scores output by the plurality of large language models.

The foregoing describes a process of scoring a case output by the first model, and outputting the case as a generated case when scores of the case meet the target condition. However, under some circumstances, the case output by the first model may not meet the target condition. Therefore, this embodiment further provides a case modification manner, to indicate that the first model can modify an output case, so that a modified case can meet the target condition.

For example, when the scores of the second case in the different dimensions output by the first model do not meet the target condition, a modification goal may be set for the first model, and the second case is modified based on the modification goal by using the first model, to enable the first model to output a modified case whose scores in the different dimensions meet the target condition.

In other words, if the second case does not meet the target condition, it indicates that the second case generated by the first model is incorrect, and the second case needs to be further modified. Therefore, by setting the modification goal for the first model, the first model can be indicated to continuously modify the second case until scores of a case modified by the first model in the different dimensions can meet the target condition. In other words, the modification goal set for the first model is to enable the first model to continuously modify the second case until the scores of the case modified by the first model in the different dimensions can meet the target condition.

For example, for the second case output by the first model, the following prompt may be generated: "Modify the following second case, so that a modified case can obtain higher scores during accuracy evaluation", and the generated prompt is input into the first model, to indicate the first model to modify the second case. After the first model modifies the case once, if scores of a modified case in the different dimensions still do not meet the target condition, the case that has been modified once is re-input into the first model for further modification, that is, the case output by the first model is cyclically modified by using the first model, until scores of a modified case in the different dimensions can meet the target condition.

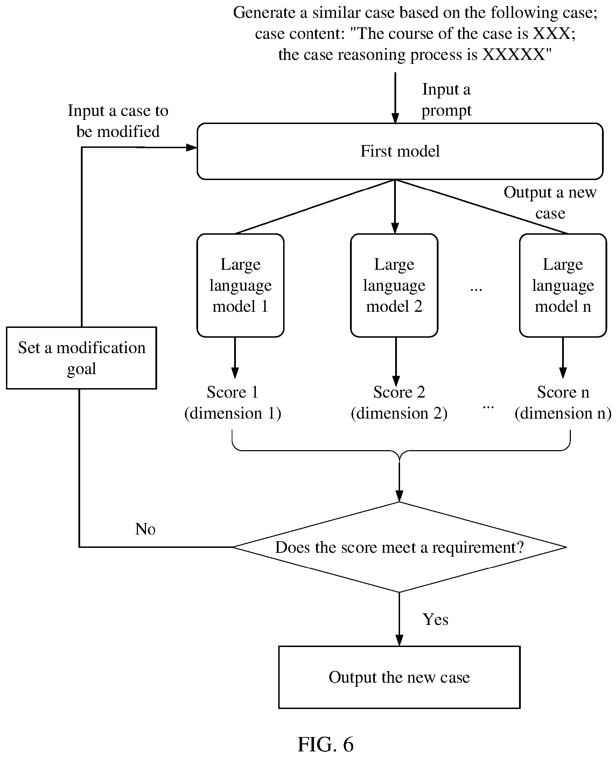

For example, FIG. 6 is a diagram of modifying a case by setting a modification goal according to an embodiment of this application. As shown in FIG. 6, after the first model outputs a new case based on an input prompt and scores the new case from different dimensions, if scores of the new case in the different dimensions do not meet the requirement (that is, do not meet the foregoing target condition), a modification goal is set for the first model, and the new case output by the first model continues to be input into the first model. The first model modifies the previously output new case, until scores of a case modified by the first model in the different dimensions can meet the requirement.

In this solution, when a case output by a large language model does not meet a requirement, a modification goal is set for the large language model, so that the large language model continuously modifies a previously output case, until accuracy of a finally output case can meet the requirement. This ensures accuracy of a case output by the large language model, effectively leverages a case initially output by the large language model, and improves efficiency of generating a valid case by the large language model.

Optionally, when the accuracy of the second case is evaluated from the different dimensions by using the large language model, a modification suggestion of the second case may be further obtained. The modification suggestion is obtained when the accuracy of the second case is evaluated from the different dimensions by using the second model. To be specific, when the accuracy of the second case is evaluated from the different dimensions by using the second model, the second model is further required to provide a corresponding modification suggestion on the second case.

For example, before the second case is evaluated by using the second model, the following prompt may be constructed first based on the second case: "In a XX scenario, the second case is specifically XXX. Analyze the second case to determine whether the second case is accurate, and score the second case based on a degree of the accuracy of the second case. A scoring rule is specifically XXX. In addition, if the second case is inaccurate, provide a modification suggestion on the second case." Then, the constructed prompt is input into the second model, so as to indicate the second model to evaluate the second case and output the modification suggestion on the second case.

In this way, when there is a modification suggestion on the second case, the modification goal set for the first model may include modifying the second case with reference to the modification suggestion, so that scores of a modified case in the different dimensions meet the target condition. For example, for the second case output by the first model, the following prompt may be generated: "Modify the case XXX based on the modification suggestion XXX, so that a modified case can obtain higher scores during accuracy evaluation", and the generated prompt is input into the first model, to indicate the first model to modify the second case based on the modification suggestion.

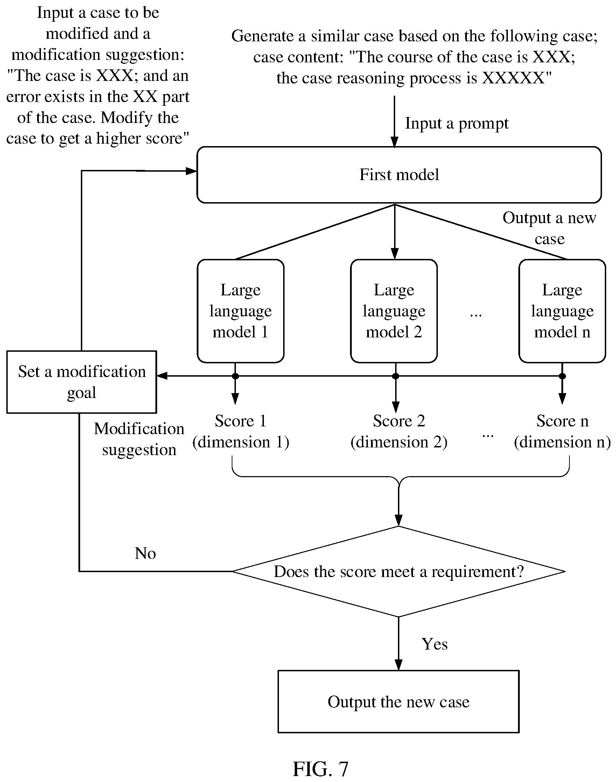

For example, FIG. 7 is a diagram of modifying a case by setting a modification goal and with reference to a modification suggestion according to an embodiment of this application. As shown in FIG. 7, after the first model outputs a new case based on an input prompt and scores the new case from different dimensions, each large language model (that is, the large language model 1 to the large language model n) participating in scoring may output a corresponding modification suggestion. In this way, if scores of the new case in the different dimensions do not meet the requirement (that is, do not meet the foregoing target condition), a modification goal is set for the first model, and the new case output by the first model and the modification suggestion provided by each of the large language model 1 to the large language model n continue to be input into the first model. The first model modifies the previously output new case with reference to the modification suggestion provided, until scores of a case modified by the first model in the different dimensions can meet the requirement.

In this solution, when accuracy of a case is evaluated by using a large language model, the large language model is further required to output a modification suggestion on the case, so that the case can be modified subsequently based on the modification suggestion provided by the large language model, thereby improving modification efficiency of the case, and ensuring that accuracy of a modified case can be effectively improved to meet a user requirement.

Optionally, the setting the modification goal for the first model, and modifying, by using the first model, the second case based on the modification goal may specifically include the following cyclical process.

Step 1: Based on a modification suggestion corresponding to a case previously output by the first model, modify the previously output case by using the first model to obtain a new case. The second case is a case output by the first model for the first time. Therefore, the second case is also the 1st version of the case that needs to be modified by the first model.

Step 2: Evaluate accuracy of the new case from different dimensions by using the large language model, to obtain scores of the new case in different dimensions.

In this way, the foregoing steps may be cyclically performed until scores of a case output by the first model in the different dimensions meet the target condition, to obtain a case output by the first model for the last time.

To be specific, if the scores of the new case (that is, a case obtained through modification by the first model) in the different dimensions meet the target condition, the foregoing cyclical process may be terminated, so as to output a case obtained through modification by the first model for the last time. If the scores of the new case in the different dimensions still do not meet the target condition, the foregoing cyclical process continues, so that the first model continuously modifies a case based on a modification suggestion fed back by the large language model, until scores of a modified case in the different dimensions meet the target condition.

In this solution, by cyclically performing a process in which the large language model serving as a judge outputs a modification suggestion, and the first model serving as a case generator continuously modifies a generated case based on the modification suggestion, the first model can continuously optimize an initially generated case in a targeted manner, so that a case can be automatically optimized in a cycle, and high-quality cases can be generated in batches.

The foregoing describes a process of automatically generating and optimizing a case by using a large language model, so that the large language model can finally output a case whose accuracy is guaranteed to some extent. Under some circumstances, to ensure accuracy of a case, the case output by the large language model may further be verified by a professional again, to ensure that the case is accurate and correct. In addition, after the professional verifies the case output by the large language model, the professional may provide corresponding feedback on the verified case, so as to improve quality of a subsequently generated case.

Optionally, after the scores of the second case in the different dimensions meet the target condition and the second case is output, a second prompt may be further obtained, where the second prompt is obtained by modifying the first prompt by a user based on the second case. To be specific, after verifying the second case generated based on the first prompt, the user may determine some deficiencies in the second case, so as to further modify the first prompt, so that a better case can be generated based on the second prompt obtained through modification.

Then, the second prompt is input into the first model, to obtain a third case output by the first model. In addition, accuracy of the third case is evaluated from different dimensions by using the large language model, to obtain scores of the third case in the different dimensions. When the scores of the third case in the different dimensions meet the target condition, the third case is output.

A process of obtaining the third case and evaluating accuracy of the third case is similar to the foregoing process of obtaining the third case and evaluating accuracy of the third case. For details, refer to the description in the foregoing embodiment. Details are not described herein again.

In this solution, after a case whose accuracy is ensured is output by using a large language model, manual verification is further performed to ensure accuracy of a final case, and a prompt that is manually adjusted based on a problem found during case verification is obtained, so that a case with higher quality is generated based on the adjusted prompt, thereby further improving quality of a subsequently generated case.

In a possible implementation, the second prompt is obtained by adding guidance information to the first prompt based on the second case, and the guidance information indicates how to generate a new case with reference to the first case. To be specific, after finding, by verifying the second case, some incorrect content in the second case, a professional may add, to the original prompt, some guidance information that can help the large language model generate a better case, so that the large language model can generate a more accurate case based on the guidance information.

The guidance information may include an explanation of some content involved in a case generation process. For example, in the field of law, some legal articles related to the case are further explained, or the first case in the first prompt is further explained. For another example, in the field of medicine, some medical terms related to the case are further explained.

Alternatively, the guidance information may include some restrictions added to the case generation process, that is, a case generated by using the first model should meet some specific restrictions. For example, in the field of law, the first prompt may specify a type of law from which law articles applicable for a generated case need to be selected, or specify law articles on which the generated case needs to be based. For another example, in the field of medicine, the first prompt may specify discussions from specified medical books to be referenced for a generated case, a medicine contraindicated for a specific symptom, or the like.

In this solution, a professional in a field to which a case relates adds guidance information to a prompt, so that more knowledge in a professional background can be integrated into the prompt, thereby helping guide a large language model in generating a case with higher quality.

In another possible implementation, the second prompt is obtained by modifying the first case in the first prompt based on the second case. For example, some content with ambiguous explanation or flawed reasoning in the first case is further explained, so that the large language model better understands a reference case in the first prompt. For another example, when quality of the second case is high, the first case in the first prompt is replaced with the second case, so that the newly generated second case is used as a reference case, to further generate another case.

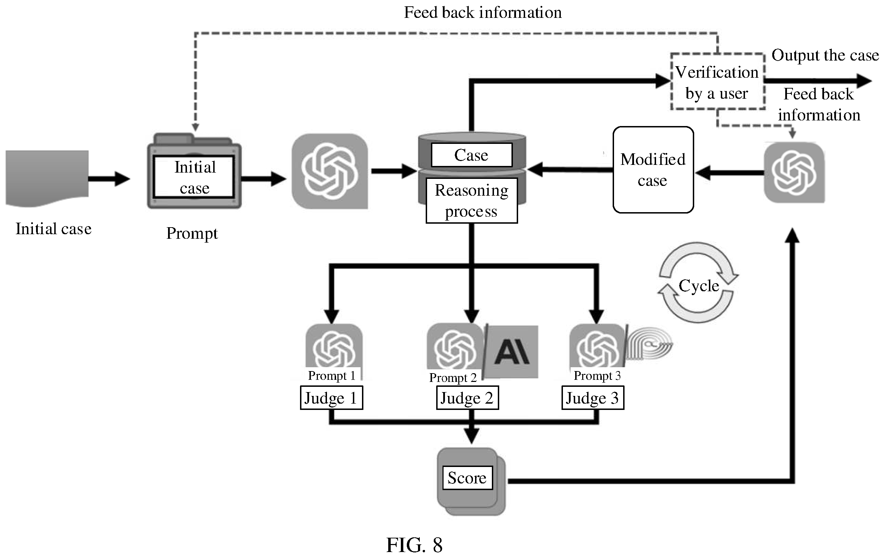

For ease of understanding, the following describes in detail a specific execution process of the case generation method provided in this embodiment with reference to a specific example. FIG. 8 is a diagram of a process of generating a case by using a large language model according to an embodiment of this application. As shown in FIG. 8, the process of generating a case by using a large language model may specifically include the following step 1 to step 7.

Step 1: Obtain a prompt generated based on an initial case.

First, the initial case that has been constructed by a professional may be obtained from a case library. The initial case includes a case and a reasoning process. Then, the corresponding prompt is generated based on the initial case.

For example, a tax law expert in the field of law interprets a tax scenario, performs reasoning on a specific case in the tax scenario step by step based on applicable law articles, and obtains a final tax treatment conclusion, thereby forming an initial case. Based on the initial case, the following prompt may be constructed: "Generate a similar case based on the case XXX. The generation process has the following constraint: XXX."

Step 2: Select a large language model as a case generator, and input the prompt into the large language model, so that the large language model generates a new case (referred to as a generated case) with reference to the initial case in the prompt.

The new case generated by the large language model also includes a case and a reasoning process.

Step 3: Select a plurality of large language models as judges, and separately input the generated case into the plurality of large language models serving as the judges, so that the different judges score the generated case.

In addition, for the generated case, different prompts may be generated from different evaluation perspectives, to indicate to score the generated case from the different evaluation perspectives. In this way, for each large language model serving as the judge, the large language model may receive a plurality of different prompts, so as to score the same generated case from a plurality of different evaluation perspectives. In this way, the different judges can output scores for the generated case from the different evaluation perspectives.

Step 4: Determine whether the generated case meets an accuracy requirement based on the scores output by the different judges.

Specifically, because each judge may output one or more scores (for example, scores in a plurality of different evaluation perspectives), a weighted average value may be obtained based on a plurality of scores output by all judges, so as to obtain an average score corresponding to the generated case.

If the average score corresponding to the generated case is greater than or equal to the target threshold, it indicates that a plurality of judges approve of the generated case. Therefore, the generated case is output.

If the average score of the generated case is less than the target threshold, it indicates that a plurality of judges disapprove of the generated case. Therefore, the generated case needs to be optimized.

It should be noted that when scoring the generated case, the judge further identifies an error in the generated case and provides a corresponding modification suggestion.

Step 5: Indicate the large language model serving as the case generator to modify the generated case with reference to the modification suggestion provided by the judge, if the average score of the generated case is less than the target threshold.

When the large language model serving as the case generator is indicated to modify the generated case with reference to the modification suggestion, a modification goal may be specified for the large language model serving as the case generator. For example, after the modification suggestion is obtained, the following prompt may be generated based on the generated case and the modification suggestion: "The case XXX has the following error XXX. Modify the case to gain recognition of more judges." The generated prompt is input into the large language model serving as the case generator, so that the generated case is modified.

Step 6: Cyclically perform step 3 to step 5 until a generated case meets the accuracy requirement, and output the final generated case.

To be specific, in step 5, after the generated case is modified, a modified case continues to be scored by using the plurality of large language models serving as the judges, so as to determine whether accuracy of the modified case meets the requirement. If the accuracy of the modified case still does not meet the requirement, the modified case is further modified based on a modification suggestion until a final modified case meets the accuracy requirement.

Step 7: A user performs verification.

The user may perform the final review and verification of the generated case whose scores meet the accuracy requirement. If the user is still not satisfied with the generated case, the user can manually modify an incorrect part in the generated case and use a modified case as a new reference case for step 1 to generate a new case. In addition, the user may alternatively provide guidance information to construct a new prompt, so as to guide the large language model in generating a case with higher quality. The specific guidance information may be, for example, some interpretations of regulations and law articles, or a limitation on content generated by the large language model. The specific guidance information depends on an actual scenario, and is not specifically limited herein.

The foregoing describes in detail the method provided in this embodiment of this application. The following describes a device that is provided in embodiments of this application and that is configured to perform the foregoing methods.

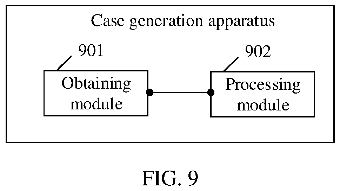

FIG. 9 is a diagram of a structure of a case generation apparatus according to an embodiment of this application. As shown in FIG. 9, the case generation apparatus provided in this embodiment of this application includes: an obtaining module 901, configured to obtain a first prompt, where the first prompt includes a first case, and the first prompt indicates to generate another case with reference to the first case; and a processing module 902, configured to input the first prompt into a first model, to obtain a second case output by the first model, where the second case is generated by the first model with reference to the first case; the processing module 902 is further configured to evaluate accuracy of the second case from different dimensions by using a second model, to obtain scores of the second case in the different dimensions; and the processing module 902 is further configured to: when the scores of the second case in the different dimensions meet a target condition, output the second case.

In a possible implementation, both the first model and the second model are large language models.

In a possible implementation, the processing module 902 is further configured to: when the scores of the second case in the different dimensions do not meet the target condition, set a modification goal for the first model, and modify, by using the first model, the second case based on the modification goal, to enable the first model to output a modified case whose scores in the different dimensions meet the target condition.

In a possible implementation, the obtaining module 901 is further configured to obtain a modification suggestion of the second case, where the modification suggestion is obtained when the accuracy of the second case is evaluated from the different dimensions by using the second model; and the modification goal includes modifying the second case with reference to the modification suggestion, to enable the scores of the modified case in the different dimensions to meet the target condition.

In a possible implementation, the processing module 902 is further configured to: based on a modification suggestion corresponding to a case previously output by the first model, modify, by using the first model, the previously output case to obtain a new case, where the second case is a case output by the first model for the first time; evaluate accuracy of the new case from the different dimensions by using the second model, to obtain scores of the new case in the different dimensions; and cyclically perform the foregoing steps until scores of a case output by the first model in the different dimensions meet the target condition, to obtain a case output by the first model for the last time.

In a possible implementation, the second model includes a plurality of different large language models, and the processing module 902 is further configured to: separately input the second case into the plurality of different large language models, to obtain scores respectively output by the plurality of different large language models.

In a possible implementation, the processing module 902 is further configured to: construct a plurality of prompts based on the second case, where the plurality of prompts each include the second case, the plurality of prompts respectively indicate to evaluate the accuracy of the second case from different evaluation perspectives, and the evaluation perspectives are all related to a field to which the second case relates; and separately input the plurality of prompts into the second model, to obtain scores of the second case in the different evaluation perspectives.

In a possible implementation, the target condition includes that a weighted average value of scores of a case in different dimensions is greater than or equal to a target threshold.

In a possible implementation, after the second case is output, the obtaining module 901 is further configured to obtain a second prompt, where the second prompt is obtained by modifying the first prompt by a user based on the second case; and the processing module 902 is further configured to: input the second prompt into the first model, to obtain a third case output by the first model; evaluate accuracy of the third case from different dimensions by using the second model, to obtain scores of the third case in the different dimensions; and when the scores of the third case in the different dimensions meet the target condition, output the third case.

In a possible implementation, the second prompt is obtained by adding guidance information to the first prompt based on the second case, and the guidance information indicates how to generate a new case with reference to the first case.

In a possible implementation, the second prompt is obtained by modifying the first case in the first prompt based on the second case.

Both the obtaining module 901 and the processing module 902 may be implemented by software, or may be implemented by hardware. For example, the following uses the processing module 902 as an example to describe an implementation of the processing module 902. Similarly, for an implementation of the obtaining module 901, refer to the implementation of the processing module 902.

The processing module 902 is used as an example of a software functional unit, and the processing module 902 may include code run on a compute instance. The compute instance may include at least one of a physical host (compute device), a virtual machine, and a container. Further, there may be one or more compute instances. For example, the processing module 902 may include code run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is configured in one region. A communication gateway needs to be configured in each VPC for communication between two VPCs in the same region or cross-region communication between VPCs in different regions. Interconnection between the VPCs is implemented via the communication gateway.

The processing module 902 is used as an example of a hardware functional unit, and the processing module 902 may include at least one compute device, for example, a server. Alternatively, the processing module 902 may be a device or the like implemented by using an application-specific integrated circuit (application-specific integrated circuit, ASIC) or a programmable logic device (programmable logic device, PLD). The PLD may be implemented by a complex programmable logic device (complex programmable logic device, CPLD), a field programmable gate array (field programmable gate array, FPGA), generic array logic (generic array logic, GAL), or any combination thereof.

A plurality of compute devices included in the processing module 902 may be distributed in a same region, or may be distributed in different regions. The plurality of compute devices included in the processing module 902 may be distributed in a same AZ, or may be distributed in different AZs. Similarly, the plurality of compute devices included in the processing module 902 may be distributed in a same VPC, or may be distributed in the plurality of VPCs. The plurality of compute devices may be any combination of compute devices such as a server, an ASIC, a PLD, a CPLD, an FPGA, and GAL.

It should be noted that, because content such as information exchange and an implementation process between the modules/units of the apparatus is based on a same concept as the method embodiments of this application, technical effects brought by the content are the same as those brought by the method embodiments of this application. For specific content, refer to the descriptions in the foregoing method embodiments of this application. Details are not described herein again.

The case generation apparatus provided in this embodiment of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, to enable a chip in an electronic device to perform the method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

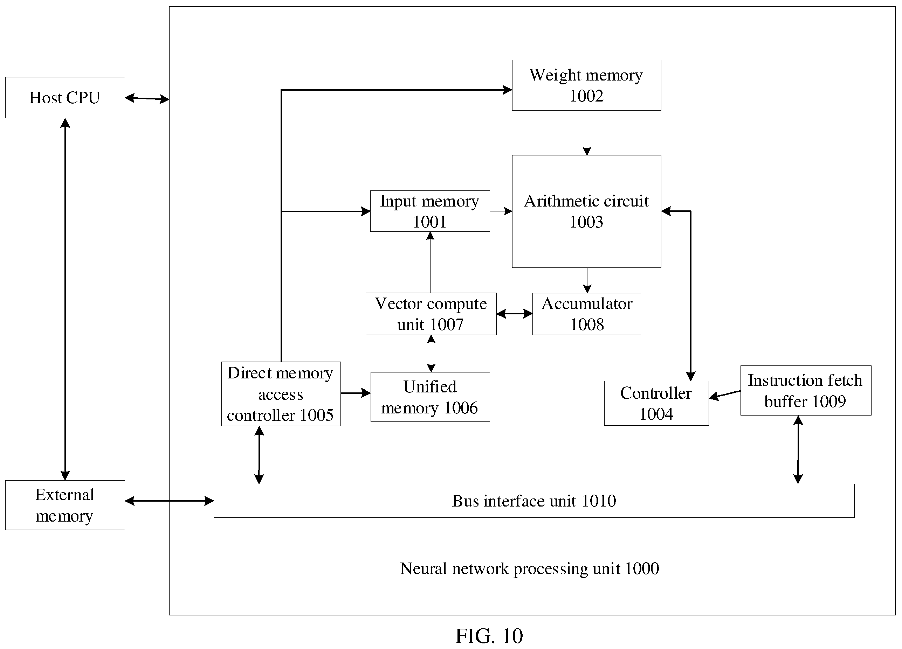

Specifically, FIG. 10 is a diagram of a structure of a chip according to an embodiment of this application. The chip may be represented as a neural network processing unit NPU 1000. The NPU 1000 is mounted to a host CPU (Host CPU) as a coprocessor, and the host CPU allocates a task. A core part of the NPU is an arithmetic circuit 1003. A controller 1004 may control the arithmetic circuit 1003 to extract matrix data in a memory and perform a multiplication operation.

In some implementations, the arithmetic circuit 1003 includes a plurality of processing units (Process Engine, PE). In some implementations, the arithmetic circuit 1003 is a two-dimensional systolic array. The arithmetic circuit 1003 may alternatively be a one-dimensional systolic array or another electronic circuit capable of performing mathematical operations such as multiplication and addition. In some implementations, the arithmetic circuit 1003 is a general-purpose matrix processor.

For example, it is assumed that there is an input matrix A, a weight matrix B, and an output matrix C. The arithmetic circuit fetches corresponding data of the matrix B from a weight memory 1002, and buffers the data on each PE in the arithmetic circuit. The arithmetic circuit obtains data of the matrix A from an input memory 1001, performs a matrix operation on the data and the matrix B, and stores an obtained partial result or final result of the matrix in an accumulator (accumulator) 1008.

A unified memory 1006 is configured to store input data and output data. Weight data is directly transferred to the weight memory 1002 through a direct memory access controller (Direct Memory Access Controller, DMAC) DMAC 1005. The input data is also transferred to the unified memory 1006 through the DMAC.

A BIU is a bus interface unit, namely, a bus interface unit 1010, and is configured to perform interaction between an AXI bus and the DMAC and between the AXI bus and an instruction fetch buffer (Instruction Fetch Buffer, IFB) 1009.

The bus interface unit (Bus Interface Unit, BIU) 1010 is used by the instruction fetch buffer 1009 to obtain instructions from an external memory, and further used by the direct memory access controller 1005 to obtain original data of the input matrix A or the weight matrix B from the external memory.

The DMAC is mainly configured to transfer input data in the external memory DDR to the unified memory 1006, transfer weight data to the weight memory 1002, or transfer input data to the input memory 1001.

A vector compute unit 1007 includes a plurality of operation processing units; and if necessary, performs further processing such as vector multiplication, vector addition, an exponential operation, a logarithmic operation, or value comparison on an output of the arithmetic circuit 1003. The vector compute unit 1007 is mainly configured to perform network computing at a non-convolutional/fully connected layer in a neural network, for example, batch normalization (Batch Normalization), pixel-level summation, and up-sampling on a feature plane.

In some implementations, the vector compute unit 1007 can store a processed output vector in the unified memory 1006. For example, the vector compute unit 1007 may apply a linear function or a non-linear function to the output of the arithmetic circuit 1003, for example, perform linear interpolation on a feature plane extracted at a convolutional layer. For another example, the vector compute unit 1007 may apply a linear function or a non-linear function to a vector of an accumulated value, to generate an activation value. In some implementations, the vector compute unit 1007 generates a normalized value, a pixel-level summation value, or both. In some implementations, the processed output vector can be used as an activation input to the arithmetic circuit 1003, for example, used in a subsequent layer in the neural network.

The instruction fetch buffer (instruction fetch buffer) 1009 connected to the controller 1004 is configured to store instructions used by the controller 1004.

The unified memory 1006, the input memory 1001, the weight memory 1002, and the instruction fetch buffer 1009 are all On-Chip memories. The external memory is private for a hardware architecture of the NPU.

Any one of the processors mentioned above may be a general-purpose central processing unit, a microprocessor, an ASIC, or one or more integrated circuits for controlling program execution.

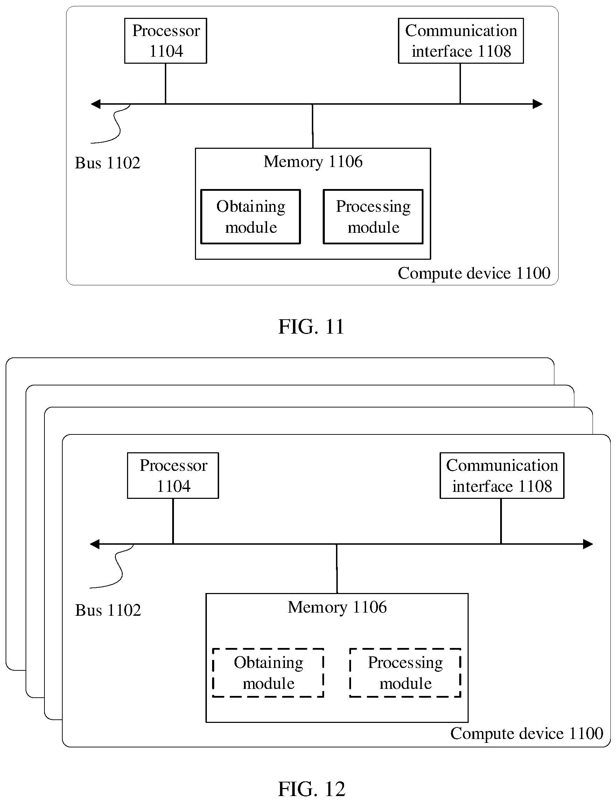

An embodiment of this application further provides a compute device 1100. FIG. 11 is a diagram of a structure of a compute device 1100 according to an embodiment of this application. As shown in FIG. 11, the compute device 1100 includes a bus 1102, a processor 1104, a memory 1106, and a communication interface 1108. The processor 1104, the memory 1106, and the communication interface 1108 communicate with each other through the bus 1102. The compute device 1100 may be a server or a terminal device. It should be understood that quantities of processors and memories in the compute device 1100 are not limited in this application.

The bus 1102 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 11. However, it does not indicate that there is only one bus or only one type of bus. The bus 1102 may include a path for transferring information between components (for example, the memory 1106, the processor 1104, and the communication interface 1108) of the compute device 1100.

The processor 1104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1106 may include a volatile memory (volatile memory), for example, a random access memory (random access memory, RAM). The processor 1104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1106 stores executable program code, and the processor 1104 executes the executable program code to separately implement functions of the receiving module and the processing module, so as to implement the foregoing case generation method. In other words, the memory 1106 stores instructions for performing the case generation method.

The communication interface 1108 uses a transceiver module, for example, but not limited to, a network interface card or a transceiver, to implement communication between the compute device 1100 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

FIG. 12 is a diagram of a structure of a compute device cluster according to an embodiment of this application. As shown in FIG. 12, the compute device cluster includes at least one compute device 1100. A memory 1106 of one or more compute devices 1100 in the compute device cluster may store same instructions for performing the case generation method.

Alternatively, in some possible implementations, a memory 1106 of one or more compute devices 1100 in the compute device cluster may separately store some instructions for performing the case generation method. In other words, a combination of the one or more compute devices 1100 may jointly execute instructions for performing the case generation method.

It should be noted that memories 1106 in different compute devices 1100 in the compute device cluster may store different instructions respectively used for performing some functions of a data processing apparatus. In other words, the instructions stored in the memories 1106 in the different compute devices 1100 may implement functions of one or more of the receiving module and the processing module.

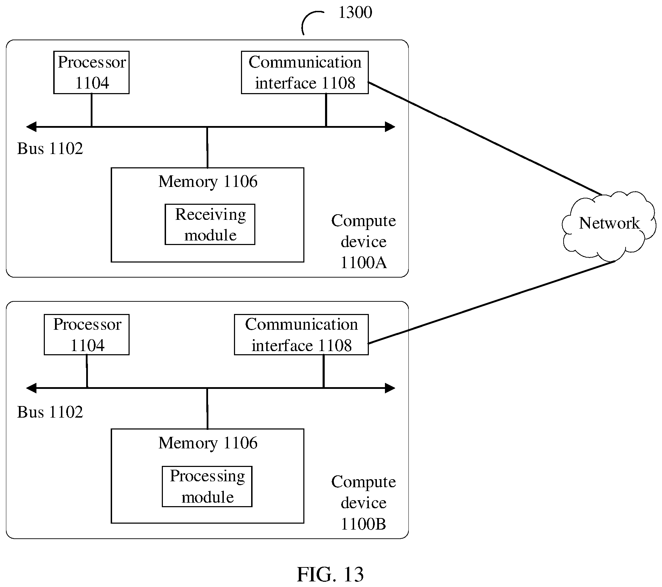

In some possible implementations, the one or more compute devices in the compute device cluster may be connected through a network. The network may be a wide area network, a local area network, or the like. FIG. 13 shows a possible implementation. FIG. 13 is a diagram of a structure of another compute device cluster according to an embodiment of this application. As shown in FIG. 13, in a compute device cluster 1300, two compute devices 1100A and 1100B are connected to each other through a network. Specifically, each compute device is connected to the network through a communication interface in the compute device. In this possible implementation, a memory 1106 in the compute device 1100A stores instructions for performing a function of a receiving module. In addition, a memory 1106 in the compute device 1100B stores instructions for performing a function of a processing module.

It should be understood that a function of the compute device 1100A shown in FIG. 13 may alternatively be completed by a plurality of compute devices 1100. Similarly, a function of the compute device 1100B may alternatively be completed by a plurality of compute devices 1100.

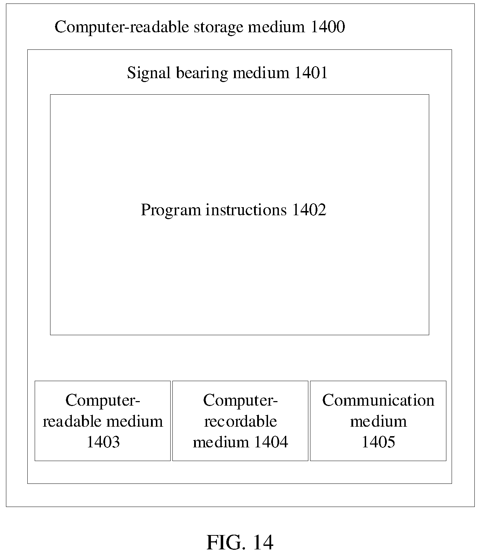

FIG. 14 is a diagram of a structure of a computer-readable storage medium according to an embodiment of this application. This application further provides a computer-readable storage medium. In some embodiments, the work procedure performed by a database system may be implemented as computer program instructions encoded on the computer-readable storage medium or encoded on another non-transitory medium or product in a machine-readable format.

FIG. 14 schematically shows a conceptual partial view of an example computer-readable storage medium arranged according to at least some embodiments shown herein, and the example computer-readable storage medium includes a computer program for executing a computer process on a compute device.

In an embodiment, the computer-readable storage medium 1400 is provided by using a signal bearing medium 1401. The signal bearing medium 1401 may include one or more program instructions 1402, and when the one or more program instructions 1402 are run by one or more processors, functions or some functions of the foregoing database system described above may be provided.

In some examples, the signal bearing medium 1401 may include a computer-readable medium 1403, for example, but not limited to, a hard disk drive, a compact disc (CD), a digital video disc (DVD), a digital tape, a memory, a ROM, or a RAM.

In some implementations, the signal bearing medium 1401 may include a computer-recordable medium 1404, for example, but not limited to, a memory, a read/write (R/W) CD, or an R/W DVD. In some implementations, the signal bearing medium 1401 may include a communication medium 1405, for example, but not limited to, a digital and/or analog communication medium (for example, an optical fiber, a waveguide, a wired communication link, or a wireless communication link). Therefore, for example, the signal bearing medium 1401 may be delivered through the communication medium 1405 (for example, a wireless communication medium complying with the IEEE 802.X standard or another transmission protocol) in a wireless form.

The one or more program instructions 1402 may be, for example, computer-executable instructions or logic implementation instructions. In some examples, the compute device may be configured to provide various operations, functions, or actions in response to the program instructions 1402 that are delivered to the compute device through one or more of the computer-readable medium 1403, the computer-recordable medium 1404, and/or the communication medium 1405.

An embodiment of this application further provides a computer program product including instructions. The computer program product may be software or a program product that includes instructions and that can be run on a compute device or stored in any usable medium. When the computer program product runs on at least one compute device, the at least one compute device is enabled to perform the case generation method described in the foregoing embodiments.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods described in embodiments of this application.

All or some of the foregoing embodiments may be implemented by using software, hardware, firmware, or any combination thereof. When software is used to implement the embodiments, all or some of the embodiments may be implemented in a form of a computer program product.

## Claims

1. A case generation method, comprising:
obtaining a first prompt, wherein the first prompt comprises a first case, and the first prompt indicates to generate another case with reference to the first case;
inputting the first prompt into a first model to obtain a second case output by the first model, wherein the second case is generated by the first model with reference to the first case;
evaluating accuracy of the second case from different dimensions by using a second model, to obtain scores of the second case in the different dimensions; and
when the scores of the second case in the different dimensions meet a target condition, outputting the second case.

2. The method according to claim 1, wherein both the first model and the second model are large language models.

3. The method according to claim 1 or 2, wherein the method further comprises:
when the scores of the second case in the different dimensions do not meet the target condition, setting a modification goal for the first model, and modifying, by using the first model, the second case based on the modification goal, to enable the first model to output a modified case whose scores in the different dimensions meet the target condition.

4. The method according to claim 3, wherein the method further comprises:
obtaining a modification suggestion for the second case, wherein the modification suggestion is obtained when evaluating the accuracy of the second case from the different dimensions by using the second model; and
the modification goal comprises modifying the second case with reference to the modification suggestion, to enable the scores of the modified case in the different dimensions to meet the target condition.

5. The method according to claim 4, wherein the setting the modification goal for the first model, and modifying, by using the first model, the second case based on the modification goal comprises:
based on a modification suggestion corresponding to a case previously output by the first model, modifying, by using the first model, the previously output case to obtain a new case, wherein the second case is a case output by the first model for the first time;
evaluating accuracy of the new case from the different dimensions by using the second model, to obtain scores of the new case in the different dimensions; and
cyclically performing the foregoing steps until scores of a case output by the first model in the different dimensions meet the target condition, to obtain a case output by the first model for the last time.

6. The method according to any one of claims 1 to 5, wherein the second model comprises a plurality of different large language models, and the evaluating the accuracy of the second case from the different dimensions by using the second model comprises:
separately inputting the second case into the plurality of different large language models, to obtain scores respectively output by the plurality of different large language models.

7. The method according to any one of claims 1 to 6, wherein the evaluating the accuracy of the second case from the different dimensions by using the second model comprises:
constructing a plurality of prompts based on the second case, wherein the plurality of prompts each comprise the second case, the plurality of prompts respectively indicate to evaluate the accuracy of the second case from different evaluation perspectives, and the evaluation perspectives are all related to a field to which the second case relates; and
separately inputting the plurality of prompts into the second model, to obtain scores of the second case in the different evaluation perspectives.

8. The method according to any one of claims 1 to 7, wherein the target condition comprises that a weighted average value of scores of a case in different dimensions is greater than or equal to a target threshold.

9. The method according to any one of claims 1 to 8, wherein after the second case is output, the method further comprises:
obtaining a second prompt, wherein the second prompt is obtained by a user modifying the first prompt based on the second case;
inputting the second prompt into the first model, to obtain a third case output by the first model;
evaluating accuracy of the third case from different dimensions by using the second model, to obtain scores of the third case in the different dimensions; and
when the scores of the third case in the different dimensions meet the target condition, outputting the third case.

10. The method according to claim 9, wherein the second prompt is obtained by adding guidance information to the first prompt based on the second case, and the guidance information indicates how to generate a new case with reference to the first case.

11. The method according to claim 9, wherein the second prompt is obtained by modifying the first case in the first prompt based on the second case.

12. A case generation apparatus, comprising:
an obtaining module, configured to obtain a first prompt, wherein the first prompt comprises a first case, and the first prompt indicates to generate another case with reference to the first case; and
a processing module, configured to input the first prompt into a first model, to obtain a second case output by the first model, wherein the second case is generated by the first model with reference to the first case;
the processing module is further configured to evaluate accuracy of the second case from different dimensions by using a second model, to obtain scores of the second case in the different dimensions; and
the processing module is further configured to: when the scores of the second case in the different dimensions meet a target condition, output the second case.

13. The apparatus according to claim 12, wherein both the first model and the second model are large language models.

14. The apparatus according to claim 12 or 13, wherein the processing module is further configured to:
when the scores of the second case in the different dimensions do not meet the target condition, set a modification goal for the first model, and modify, by using the first model, the second case based on the modification goal, to enable the first model to output a modified case whose scores in the different dimensions meet the target condition.

15. The apparatus according to claim 14, wherein
the obtaining module is further configured to obtain a modification suggestion of the second case, wherein the modification suggestion is obtained when the accuracy of the second case is evaluated from the different dimensions by using the second model; and
the modification goal comprises modifying the second case with reference to the modification suggestion, to enable the scores of the modified case in the different dimensions to meet the target condition.

16. The apparatus according to claim 15, wherein the processing module is further configured to:
based on a modification suggestion corresponding to a case previously output by the first model, modify, by using the first model, the previously output case to obtain a new case, wherein the second case is a case output by the first model for the first time;
evaluate accuracy of the new case from the different dimensions by using the second model, to obtain scores of the new case in the different dimensions; and
cyclically perform the foregoing steps until scores of a case output by the first model in the different dimensions meet the target condition, to obtain a case output by the first model for the last time.

17. The apparatus according to any one of claims 12 to 16, wherein the second model comprises a plurality of different large language models, and the processing module is further configured to:
separately input the second case into the plurality of different large language models, to obtain scores respectively output by the plurality of different large language models.

18. The apparatus according to any one of claims 12 to 17, wherein the processing module is further configured to:
construct a plurality of prompts based on the second case, wherein the plurality of prompts each comprise the second case, the plurality of prompts respectively indicate to evaluate the accuracy of the second case from different evaluation perspectives, and the evaluation perspectives are all related to a field to which the second case relates; and
separately input the plurality of prompts into the second model, to obtain scores of the second case in the different evaluation perspectives.

19. The apparatus according to any one of claims 12 to 18, wherein the target condition comprises that a weighted average value of scores of a case in different dimensions is greater than or equal to a target threshold.

20. The apparatus according to any one of claims 12 to 19, wherein after the second case is output, the obtaining module is further configured to obtain a second prompt, wherein the second prompt is obtained by modifying the first prompt by a user based on the second case; and
the processing module is further configured to:
input the second prompt into the first model, to obtain a third case output by the first model;
evaluate accuracy of the third case from different dimensions by using the second model, to obtain scores of the third case in the different dimensions; and
when the scores of the third case in the different dimensions meet the target condition, output the third case.

21. The apparatus according to claim 20, wherein the second prompt is obtained by adding guidance information to the first prompt based on the second case, and the guidance information indicates how to generate a new case with reference to the first case.

22. The apparatus according to claim 20, wherein the second prompt is obtained by modifying the first case in the first prompt based on the second case.

23. A compute device cluster, comprising at least one compute device, wherein each compute device comprises a processor and a memory; and
the processor of the at least one compute device is configured to execute instructions stored in the memory of the at least one compute device, to enable the compute device cluster to perform the operation steps in the method according to any one of claims 1 to 11.

24. A computer program product comprising instructions, wherein when the instructions are run by a compute device cluster, the compute device cluster is enabled to perform the operation steps in the method according to any one of claims 1 to 11.

25. A computer-readable storage medium, comprising computer program instructions, wherein when the computer program instructions are executed by a compute device cluster, the compute device cluster performs the operation steps in the method according to any one of claims 1 to 11.
